# EUROPÄISCHE PATENTSCHRIFT

(11) **EP 1 799 506 B1**
(45) Veröffentlichungstag und Bekanntmachung des Hinweises auf die Patenterteilung: **30.06.2010**
(21) Anmeldenummer: 05801443.2
(22) Anmeldetag: 05.10.2005
(51) Int. Cl.: B60N 2/68, B60N 2/22, B21D 39/03, B23K 26/20

(54) **LASERGESCHWEISSTER RAHMEN EINES SITZES SOWIE RECLINER**
LASER-WELDED FRAME OF A SEAT AND RECLINER
CHASSIS DE SIEGE SOUDE AU LASER ET SIEGE INCLINABLE

(30) Priorität: 08.10.2004 DE 102004049359
(43) Veröffentlichungstag der Anmeldung: 27.06.2007
(73) Patentinhaber: Johnson Controls GmbH, 51399 Burscheid (DE)
(72) Erfinder: GEISLER, Axel, 51399 Burscheid (DE); HAMERS, Michael, 35216 Biedenkopf (DE); SCHMITTER, Andreas, 42111 Wuppertal (DE)
(74) Vertreter: Wolff, Felix
(86) Internationale Anmeldenummer: PCT/EP2005/055022
(87) Internationale Veröffentlichungsnummer: WO 2006/040282

(56) Entgegenhaltungen:
- EP-A- 1 136 315
- EP-A- 1 180 410
- EP-B- 1 154 875
- WO-A-99/19164
- DE-A1- 10 110 529
- US-A1- 2004 113 481

## Beschreibung

Die vorliegende Erfindung betrifft einen Rahmen eines Sitzes, insbesondere eines Vordersitzes eines Kraftfahrzeuges, der aus mehreren Teilen besteht; die jeweils Verbindungsflächen aufweisen. Des weiteren betrifft die vorliegenden Erfindung ein Verfahren zur Herstellung eines Rahmens eines Sitzes sowie einen Recliner und ein Verfahren zum stoffschlüssigen Verbinden von zwei Teilen und ein Teil, das sich insbesondere zum Laserschweißen eignet.

Rahmen von Sitzen, insbesondere von Vordersitzen von Kraftfahrzeugen, wie sie beispielsweise in der EP 1 136 315 A, der WO 99/19164 A, der EP 1 154 875 B sowie der US 2004/0113481 A offenbart werden, bestehen in der Regel auf mehreren Teilen, die gemäß dem Stand der Technik beispielsweise durch Schutzgasschweißen miteinander verbunden werden. Dieses Verfahren ist jedoch vergleichsweise aufwendig, weil die Teile zum Schweißen in der Regel oftmals mehrmals aufgespannt und/oder mehrmals in ihrer Lage verändert werden müssen, was zeit- und damit kostenintensiv ist. Darüber hinaus ist Schutzgasschweißen an für sich ein vergleichsweise langsames Verfahren.

Es war deshalb die Aufgabe der vorliegenden Erfindung, einen Rahmen eines Sitzes zur Verfügung zu stellen, der die Nachteile des Standes der Technik nicht aufweist.

Gelöst wird die Aufgabe mit einem Rahmen eines Sitzes, nach Patentanspruch 1.

Es war für den Fachmann überaus erstaunlich und nicht zu erwarten, dass der erfindungsgemäße Rahmen durch einmaliges Aufspannen gefertigt werden kann. Die Teile müssen in ihrer Lage während des Schweißens nicht verändert werden. Der erfindungsgemäße Rahmen ist einfach und kostengünstig herzustellen.

Erfindungsgemäß besteht der Rahmen aus mehreren Teilen, die Verbindungsflächen aufweisen, die durch Laserschweißen miteinander verbunden werden.

Beim Laserschweißen wird ein Laserstrahl auf die zu schweißenden Werkzeuge fokussiert und erwärmt die Schweißstelle bis zur Schweißtemperatur auf, bei der der Werkstoff mindestens eines der beiden zu verschweißenden Teile flüssig wird. Beim Erstarren verbinden sich die beiden Teile miteinander. Es können sowohl Festkörperlaser als auch Gaslaser eingesetzt werden. Übliche Leistungen liegen zwischen 2 und 60 kW. Gegebenfalls erfolgt das Laserschweißen unter Schutzgas. Vorzugsweise pendelt der Laser während des Schweißens, so das keine gerade sondern eine um eine Gerade schwingende Schweißnaht erzeugt wird. Daraus resultierende längere Schweißnähte und/oder der aufgeschmolzene Bereich wird breiter,

Erfindungsgemäß werden die Verbindungsflächen von zwei Teilen durch Laserschweißen miteinander verbunden. Diese Verbindungsflächen sind vorzugsweise durch Toleranzen so gestaltet, dass eine nahezu spaltfreie Verbindung herstellt werden kann. Erfindungsgemäß sind die Fügeflächen deshalb eben.

Erfindungsgemäß weisen die Teile im Bereich der Verbindungsflächen Mittel auf, die die jeweiligen Teile in ihrer Lage zueinander festlegen, so dass die Teile in eine Spannvorrichtung eingelegt gegeneinander verspannt und dann geschweißt werden können. Die Mittel müssen dabei so ausgestaltet sein, dass die Teile beim Einlegen in die Verspannvorrichtung, spätestens jedoch beim Verspannen, eine vorgegebene Lage zueinander einnehmen und beim Verspannen bzw. beim Laserschweißen nicht verrutschen. Diese Mittel können beliebige dem Fachmann geläufige Mittel form- und/oder kraftschlschlüssige Verbindungen, wie beispielsweise Anstoßflächen, sein. Durch diese Mittel und durch das Zusammenspiel der Verbindungsflächen wird die Lage der jeweils zu verbindenden Teile in allen Raumrichtungen zueinander festgelegt, so dass ein Produkt mit vergleichsweise geringen Fertigungstoleranzen resultiert. Durch das Zusammenspiel der Verbindungsflächen bzw. der Mittel können alle für den Teilrahmen benötigten Teile beispielsweise in eine Aufspannvorrichtung gelegt und miteinander verspannt werden, ohne dass sie dabei verrutschen. Die Laserschweißung kann dann in einer einzigen Aufspannung erfolgen.

Im Folgenden wird die Erfindung anhand der Figuren 1-2 erläutert.

Diese Erläuterungen sind lediglich beispielhaft und schränken den allgemeinen Erfindungsgedanken nicht ein. Die Erläuterungen gelten gleichermaßen für alle Gegenstände der vorliegenden Erfindung.
- **Figur 1**: zeigt einen Teil des erfindungsgemäßen Rahmens,
- **Figur 2**: zeigt das erfindungsgemäße Teil mit einer Lasche.

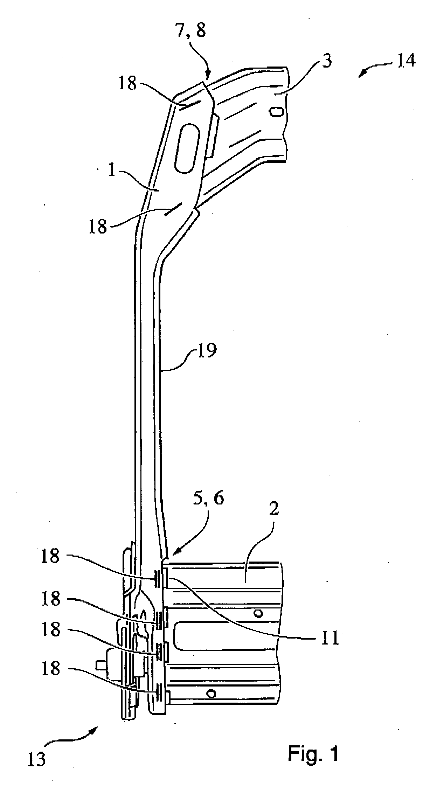

In **Figur 1** ist ein Teil des erfindungsgemäßen Rahmens dargestellt, der aus vier Teilen 1 - 4 besteht, wobei nur drei Teile 1, 2,3 dargestellt sind. Bei den Teilen handelt es sich um Pressteile, die alle eine Materialdicke von 0,9 mm aufweisen. Die Teile werden so in eine Aufspannung eingelegt, dass die Verbindngsflächen 5, 6 der Teile 1 und 2 und die Verbindungsflächen 7, 8 der Teile 1 und 3 möglichst ohne Spalt übereinanderliegen. Um die Verbindungsflächen schweißtechnisch möglichst optimal zu gestalten, ist das Seitenteil 1, insbesondere im Verbindungsbereich 5, 6 sehr steif gestaltet, während die Quertraverse 2 flexibel konstruiert ist. Danach werden die Teile gegeneinander verspannt, um noch vorhandene Spalte zu minimieren. Die Verbindungsflächen werden durch in dem vorliegenden Fall parallele Schweißnähte 18 miteinander verbunden. Der Fachmann erkennt, dass die Schweißnähte auch eine andere Form aufweisen können. Beispielsweise sind kreisförmige Schweißnähte eine bevorzugte Ausführungsform. Die Verbindungsflächen sind in ihren Toleranzen so ausgeführt, dass die beiden Flächen eben aufeinanderliegen und keinen Spalt zueinander aufweisen.

Des weiteren weist die Quertraverse 2 Mittel 11, beispielsweise mehrere Verprägung auf, die die Teile in ihrer Lage zueinander eindeutig definieren, so dass sie beim Verspannen, was vor dem Verschweißen erfolgt, der Spalt zwischen den Teilen minimiert werden kann. Die Teile weisen dadurch eine geringe Toleranz in Bezug auf Planheit und Winkligkeit auf. Der Fachmann erkennt, dass derartige Mittel auch an den Teilen 1 bzw. an den Teile 3 vorhanden sein können.

Die Kontur 19 kann beliebig, gemäß den Kundenwünschen gestaltet sein und kann an Bauteile, beispielsweise Airbags, die in Sitzbereich angeordnet werden, angepasst werden.

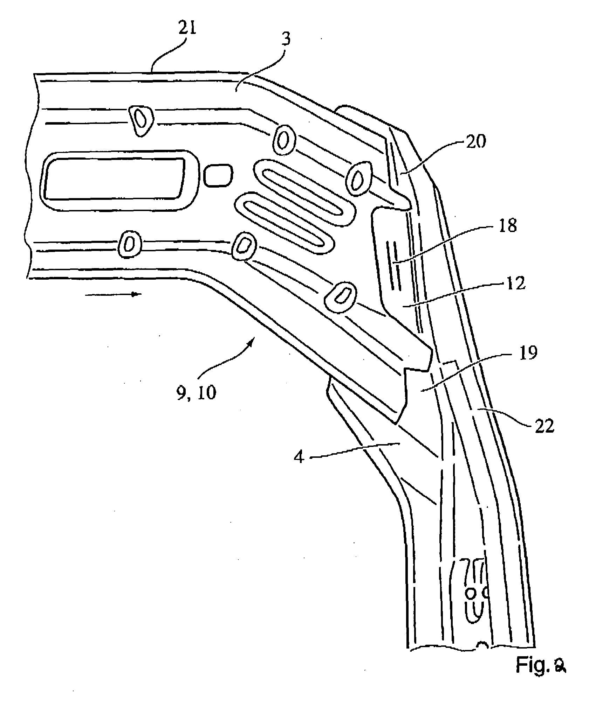

**Figur 2** zeigt das erfindungsgemäße Teil 4 mit der Lasche 12. Die Quertraverse 3, die im Kopfstützenbereich des Kraftfahrzeugsitzes angeordnet ist, ist im Randbereich 21 umgebogen, um die Steifigkeit des Rahmens zu erhöhen und ein Verletzungsrisiko zu vermindern. Die Teile 3 und 4 werden, wie durch den Pfeil dargestellt, zusammengefügt und miteinander verspannt und durch die entsprechende Vorrichtung in eine entsprechende Lage zueinander positioniert. Sodann wird die Lasche 18 runtergeklappt bis sie spaltfrei auf dem Teil 9 aufliegt. Dieses Herunterdrücken kann beispielsweise durch Niederhalter erfolgen. Sodann werden das Teil 3 und die Lasche 18 stoffschlüssig durch Laserschweißen mittels zweier beliebig angeordneter Laserschweißnähte 18 miteinander verbunden. Durch die bezogen auf die Papierebene parallele Anordnung der zu verschweißenden Flächen ist ein einfaches Fügen möglich. Dies ist auch für die Minimierung der Tolleranzen der Bauteile zueinander förderlich. Die Geometrie 22 des Teils 4 erlaubt einen guten Kraftfluss im Gesamtsystem. Die Verbindung zwischen den Teilen weist ein hohe Ebenheit und geringe Toleranzen auf

Der Fachmann versteht, das die Schweißnähte 18 nicht parallel sein müssen und dass gegebenenfalls auch eine Schweißnaht ausreicht. Auch die runde Schweißnaht des Recliners kann eine andere Form aufweisen.

Aus allen Figuren ist ersichtlich, dass die Teile 1, 2, 3 ineinander geschachtelt und die Übergange so gestaltet, dass eine gute Kraftübertragung zwischen den Bauteilen möglich ist.

### Bezugszeichenliste

- 1-4: Teile des Rahmens der Rücklehne eines Vordersitzes
- 5-10: Verbindungsflächen
- 11: Mittel zur Definition der Lage der Teile 1-4 zueinander, Verprägung
- 12, 19, 20: Mittel zur Definition der Lage der Teile 1-4 zueinander
- 13: Recliner
- 14: Rücklehne

- 18: Laserschweißnaht
- 19: Kontur
- 20: Verbindungsfläche
- 21: Rand
- 22: Außengeometrie des Seitenteils 1, 4

## Patentansprüche

1. Rahmen eines Sitzes, insbesondere eines Vordersitzes eines Kraftfahrzeuges, der aus mehreren Teilen (1 - 4) besteht, die jeweils Verbindungsflächen (5 - 10) aufweisen, wobei jeweils zwei Verbindungsflächen (5 -10), die jeweils zu zwei unterschiedlichen Teilen (1 - 4) gehören, stoffschlüssig durch Laserschweißen miteinander verbunden sind, die Seitenteile (1, 4)) und die Quertraversen (2, 3) Teile des Rahmens sind und die Verbindungsflächen (5 - 10) eben sind, **dadurch gekennzeichnet, dass** der Verbindungsbereich der Seitenteile sehr steif und die Quertraversen flexibel konstruiert sind, so dass ein zumindest nahezu spaltfreier Zusammenbau erfolgt und im Bereich der Verbindungsflächen (5 - 10) Mittel (11, 12) angeordnet sind, die die Lage von mindestens zwei Teilen zueinander in allen Raumrichtungen zueinander festlegen.

2. Rahmen nach einem der voranstehenden Ansprüche, **dadurch gekennzeichnet, dass** die Lage der Teile (1 - 4) in einer Aufspannung zueinander fixierbar sind.

3. Rahmen nach einem der voranstehenden Ansprüche, **dadurch gekennzeichnet**, die Laserschweißung der Teile (1 - 4) in einer Aufspannung erfolgt.

4. Sitz, insbesondere Vordersitz eines Kraftfahrzeuges, aufweisend einen Rahmen nach einem der voranstehenden Ansprüche.

## Claims

1. Frame of a seat, especially of a front seat of a motor vehicle, which consists of a plurality of parts (1-4), which have respective joining surfaces (5-10), two respective joining surfaces (5-10) which belong to two respective different parts (1-4), being positively joined to one another by laser-welding, the side parts (1, 4) and the cross members (2, 3) being parts of the frame and the joining surfaces (5-10) being flat, **characterized in that** the joining region of the side parts is of very rigid construction and the cross member is of flexible construction, so that an assembly results, which is at least almost without gaps, and in the region of the joining surfaces (5-10), means (11, 12) are arranged which fix the position of at least two parts relative to one another in all spatial directions.

2. Frame according to one of the preceding claims, **characterized in that** the position of the parts (1-4) may be fixed to one another in a clamp.

3. Frame according to one of the preceding claims, **characterized in that** the laser-welding of the parts (1-4) is carried out in a clamp.

4. Seat, especially a front seat of a motor vehicle, comprising a frame according to one of the preceding claims.

## Revendications

1. Châssis d'un siège, notamment d'un siège avant d'un véhicule automobile, qui se compose de plusieurs pièces (1 - 4), qui présentent à chaque fois des surfaces de connexion (5 - 10), deux surfaces de connexion respectives (5 - 10), qui appartiennent à chaque fois à deux pièces différentes (1 - 4), étant connectées l'une à l'autre par liaison de matière par soudage au laser, les pièces latérales (1, 4) et les traverses (2, 3) faisant partie du châssis, et les surfaces de connexion (5 - 10) étant planes, **caractérisé en ce que** la région de connexion des pièces latérales est très rigide et les traverses sont flexibles, de telle sorte que l'on obtienne un assemblage au moins pratiquement sans fente, et des moyens (11, 12) étant disposés dans la région des surfaces de connexion (5 - 10), lesquels fixent la position d'au moins deux pièces l'une par rapport à l'autre dans toutes les directions spatiales.

2. Châssis selon l'une quelconque des revendications précédentes, **caractérisé en ce que** la position des pièces (1 - 4) les unes par rapport aux autres peut être fixée dans un moyen de fixation.

3. Châssis selon l'une quelconque des revendications précédentes, **caractérisé en ce que** le soudage au laser des pièces (1 - 4) s'effectue dans un moyen de fixation.

4. Siège, notamment siège avant d'un véhicule automobile, présentant un châssis selon l'une quelconque des revendications précédentes.
